# FASCICULE DE BREVET EUROPEEN

(11) **EP 2 084 552 B1**
(45) Date de publication et mention de la délivrance du brevet: **11.08.2010**
(21) Numéro de dépôt: 07848366.6
(22) Date de dépôt: 24.09.2007
(51) Int. Cl.: G01S 5/02, G01S 5/14

(54) **PROCÉDÉ ET DISPOSITIF DE LOCALISATION PAR DÉTECTION D'ÉMETTEURS DE SIGNAUX HERTZIENS**
VERFAHREN UND EINRICHTUNG ZUR ORTSDETEKTION VON FUNKSIGNALSENDERN
METHOD AND DEVICE FOR THE DETECTION LOCATION OF RADIO SIGNAL TRANSMITTERS

(30) Priorité: 23.10.2006 FR 0654441
(43) Date de publication de la demande: 05.08.2009
(73) Titulaire: INSTITUT NATIONAL DE RECHERCHE SUR LES TRANSPORTS ET LEUR SECURITE (INRETS), 94110 Arcueil (FR)
(72) Inventeur: COUTEL, Simon, 78600 Maisons Laffitte (FR); VON ARNIM, Axel, 75013 Paris (FR); FRANÇOIS, Sébastien, 49124 Le Plessis Grammoire (FR)
(74) Mandataire: Laget, Jean-Loup
(86) Numéro de dépôt international: PCT/FR2007/051996
(87) Numéro de publication internationale: WO 2008/050016

(56) Documents cités:
- EP-A- 1 445 970
- EP-A2- 1 022 578
- WO-A1-01/50151
- DE-A1- 19 928 451
- FR-A- 2 859 792
- US-A1- 2004 203 885
- US-B2- 6 674 403

## Description

La présente invention a pour objets un procédé et un dispositif de localisation.

Pour déterminer la position d'un dispositif, qui peut être embarqué dans un véhicule ou porté par un piéton, il est connu d'utiliser un système de positionnement par satellites, par exemple un système GPS. Un tel système permet de déterminer un positionnement absolu du dispositif à partir des positions absolues d'un ensemble de satellites en utilisant un algorithme de triangulation.

Cependant, les systèmes de localisation par satellites peuvent manquer de précision, de disponibilité et/ou de fiabilité, en particulier lorsque le canal de propagation est obstrué par la présence de masques, notamment en milieu urbain.

Le développement des systèmes informatiques de communication sans fil entraîne des déploiements massifs d'émetteurs. Il peut donc être intéressant d'utiliser ces émetteurs pour réaliser un nouveau système de localisation.

Le document US 2006/0106850 décrit un procédé de localisation utilisant des réseaux Wi-Fi, dans lequel un dispositif émet une requête à destination de tous les émetteurs à portée du dispositif, enregistre les réponses des émetteurs, décode les identifiants des émetteurs et calcule la puissance de chaque signal reçu. Le dispositif utilise ensuite une base de données contenant les positions des émetteurs pour déterminer, par triangulation, une position du dispositif.

Le document EP-A-1 022 578 divulgue un système de localisation utilissant des valeurs de puissance en provenance des stations de base stockées dans une mémoire.

Cependant, les mesures de puissance pour les signaux émis par des émetteurs IEEE 802.11 (2.45-5 Ghz), par exemple des émetteurs Wi-Fi, peuvent, en un endroit donné, subir des fluctuations imprévisibles, du fait des conditions météorologiques, de la vitesse relative entre le récepteur et l'émetteur, de la présence d'obstacles à proximité, de la géométrie de l'environnement à proximité de l'émetteur ou du récepteur, etc. La localisation par triangulation par rapport à une constellation d'émetteurs IEEE 802.11 ne permet donc pas une localisation robuste, fiable et précise.

La présente invention a pour but de proposer un dispositif et un procédé de localisation qui évitent au moins certains des inconvénients précités, et qui permettent une localisation robuste, fiable et précise.

A cet effet, l'invention a pour objet un procédé de localisation **caractérisé en ce qu**'il comprend les étapes consistant à :
a) recevoir dans un dispositif de localisation des signaux provenant d'émetteurs de signaux hertziens, chaque émetteur de signaux hertziens étant apte à émettre une trame numérique dont l'entête contient au moins un identifiant de l'émetteur, et déterminer une liste d'identifiants contenant un identifiant de chaque émetteur dont au moins un signal a été reçu,
b) déterminer, en comparant ladite liste d'identifiants déterminée à l'étape a) avec des listes d'identifiants mémorisées dans une base de données de localisation, un ensemble d'éléments candidats, chaque liste d'identifiants mémorisée dans ladite base de données de localisation étant associée à une sous-zone, dite élément, d'une zone géographique,
c) sélectionner le meilleur candidat parmi ledit ensemble d'éléments candidats en utilisant un ensemble de critères de sélection comprenant au moins un critère relatif au caractère volatil d'un émetteur dont l'identifiant appartient à une liste d'identifiants associée à un élément candidat, et
d) localiser ledit dispositif de localisation dans ledit élément sélectionné comme meilleur candidat à l'étape c).

Selon un mode de réalisation de l'invention, le procédé de localisation comprend une étape supplémentaire consistant à estimer la position dudit dispositif de localisation en utilisant la localisation dudit dispositif de localisation définie à l'étape d) et un modèle d'évolution des déplacements dudit dispositif de localisation.

De préférence, l'étape b) comprend les sous-étapes consistant à:
e) déterminer un coefficient de corrélation entre ladite liste d'identifiants déterminée à l'étape a) et une liste d'identifiants mémorisée dans ladite base de données de localisation, et,
f) lorsque ledit coefficient de corrélation est supérieur à un seuil prédéterminé, sélectionner ledit élément associé à ladite liste d'identifiants mémorisée dans ladite base de données comme élément candidat.

Avantageusement, ladite base de données de localisation comprend des données topologiques relatives à la position des éléments les uns par rapport aux autres, les étapes e) et f) étant exécutées pour une liste d'identifiants associée à l'élément dans lequel se trouvait ledit dispositif de localisation à la dernière exécution dudit procédé de localisation et pour chaque liste d'identifiants associée à un élément voisin de l'élément dans lequel se trouvait ledit dispositif de localisation à la dernière exécution dudit procédé de localisation.

Selon un mode de réalisation de l'invention, ledit ensemble de critères de sélection comprend au moins un critère relatif à un ratio entre ladite liste d'identifiants déterminée à l'étape a) et une liste d'identifiants mémorisée dans ladite base de données de localisation et/ou un critère relatif au respect de la continuité du déplacement dudit dispositif de localisation.

Selon un mode de réalisation de l'invention, l'étape a) comprend une sous-étape consistant à mesurer la puissance de chaque signal reçu, ledit ensemble de critères de sélection comprenant au moins un critère relatif à la puissance d'un signal reçu.

Avantageusement, le procédé de localisation est combiné avec un procédé de mise à jour, effectué après l'étape d), comprenant une étape consistant à :
g) déterminer un identifiant d'un émetteur dont un signal a été reçu à l'étape a) et qui n'appartient pas à la liste d'identifiants associée audit élément sélectionné comme meilleur candidat et mémoriser ledit identifiant dans la liste d'identifiants associée audit élément sélectionné comme meilleur candidat.

Selon un mode de réalisation de l'invention, ledit dispositif de localisation comporte des moyens de connexion à un réseau Internet.

Avantageusement, dans ce mode de réalisation, à l'étape g), le critère relatif au caractère volatil dudit émetteur dont l'identifiant est mémorisé est fixé à une valeur basse, ledit procédé de mise à jour comprenant des étapes consistant à connecter ledit dispositif de localisation à un site Internet de mise à jour, comparer un identifiant mémorisé à l'étape g) avec le contenu d'une base de données de mise à jour, et, en fonction de ladite comparaison, mettre à jour la valeur dudit critère relatif au caractère volatil de l'émetteur dans ladite base de données de localisation.

Selon un mode de réalisation de l'invention, ledit dispositif de localisation est utilisé en combinaison avec un dispositif d'indication de cap.

Selon un mode de réalisation de l'invention, ledit dispositif de localisation est apte à coopérer avec un système de positionnement par satellites, ledit procédé de localisation comportant les étapes consistant à :
h) déterminer un premier indice de confiance associé audit système de positionnement par satellites,
i) déterminer un deuxième indice de confiance associé audit dispositif de localisation,
j) comparer lesdits premier et deuxième indices de confiance et, en fonction de la comparaison, déterminer si la localisation doit être déterminée à partir dudit système de positionnement par satellites, à partir dudit dispositif de localisation ou à partir d'une combinaison dudit système de positionnement par satellites et dudit dispositif de localisation.

L'invention a également pour objet un dispositif de localisation utilisant le procédé de localisation.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :
- la figure 1 est une vue schématique fonctionnelle d'un dispositif de localisation selon un mode de réalisation de l'invention ;
- la figure 2 est un schéma fonctionnel représentant les étapes d'un procédé de construction d'une carte numérique destinée à être utilisée par le dispositif de localisation de la figure 1 ;
- la figure 3 est un schéma fonctionnel représentant les étapes d'un procédé de localisation exécuté par le dispositif de localisation de la figure 1 ;
- la figure 4 est un schéma fonctionnel représentant les étapes d'un deuxième procédé de localisation ;
- la figure 5 est un schéma fonctionnel représentant les étapes d'un procédé de mise à jour automatique ;

On considère une zone géographique, qui peut être, par exemple, une ville, une région, etc. Des émetteurs de signaux hertziens sont distribués de manière inconnue dans la zone géographique. Chaque émetteur est apte à émettre un signal numérique décomposé en trames, l'entête d'une trame contenant au moins un identifiant de l'émetteur. En d'autres termes, les émetteurs respectent les nonnes issues du groupe de travail IEEE 802 et peuvent être, par exemple, des émetteurs Wi-Fi, Wi-max, Bluetooth, ZigBee, etc. Un identifiant peut être attribué de manière unique à chaque émetteur. En variante, plusieurs émetteurs peuvent avoir le même identifiant.

Dans l'exemple de réalisation décrit, les émetteurs sont des émetteurs Wi-Fi.

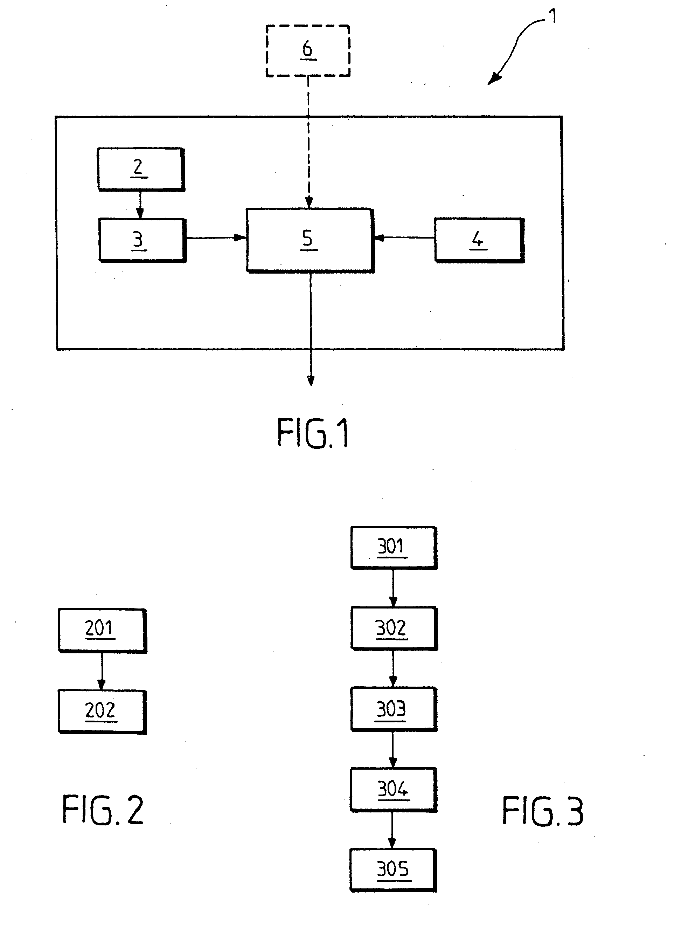

La figure 1 montre un dispositif de localisation 1 comportant un récepteur 2, un module d'écoute passive 3, un module de stockage de données 4 et un module de traitement 5.

Le récepteur 2 est apte à recevoir des signaux Wi-Fi émis par des émetteurs disposés à proximité du dispositif 1. Le module d'écoute 3 a pour fonction de réaliser une écoute passive des signaux reçus par le récepteur 2 et de déterminer un identifiant de chaque émetteur visible, c'est-à-dire de chaque émetteur pour lequel au moins un signal a été reçu.

Le module de stockage 4 comprend par exemple une mémoire de type ROM (mémoire morte), pour le stockage de routines et d'une carte numérique associée à la zone géographique, et une mémoire de type RAM (mémoire vive), pour le stockage de données déterminées ou calculées pendant l'exécution d'un procédé de localisation qui sera décrit en détail plus loin.

Le module de traitement 5 a notamment pour fonction de déterminer une localisation du dispositif 1 en utilisant une liste d'identifiants déterminée par le module d'écoute 3.

Le dispositif de localisation 1, qui se présente par exemple sous la forme d'un boîtier, peut être disposé dans un véhicule ou porté par un utilisateur se déplaçant à pied. En variante, le dispositif de localisation peut être intégré dans un PDA (Personal Digital Assistant), un téléphone mobile, ou autre.

Dans le texte, les termes « position » et « positionnement » désignent la détermination des données géographiques, c'est-à-dire les coordonnées d'un objet dans un référentiel donné (WGS84, Lambert, etc.). Le terme « carte numérique » désigne un ensemble de données, ou base de données, relatives à la zone géographique, la base de données discrétisant la zone géographique en éléments linéiques, surfaciques ou volumiques et contenant des informations relatives à la topologie des éléments, c'est-à-dire à la position des éléments les uns par rapport aux autres. Le terme « localisation » désigne la détermination d'une position d'un objet dans la carte numérique. En d'autres termes, la localisation désigne l'action de déterminer l'appartenance d'un objet à un élément de la carte numérique, le verbe « appartenir » signifiant être sur un élément linéique, dans un élément surfacique ou dans un élément volumique, en fonction du type d'élément.

En se référant à la figure 2, on va maintenant décrire les étapes d'un procédé de construction d'une carte numérique associée à la zone géographique. Ce procédé est exécuté par un dispositif de construction d'une carte numérique (non représenté), comportant des moyens de stockage, des moyens de réception de signaux Wi-Fi et des moyens de traitement des données.

A l'étape 201, la zone géographique est fragmentée en sous-zones, dites éléments E. Un élément E peut être un segment, un élément de surface ou un élément de volume. Un élément E est continu et connexe. Les dimensions d'un élément E dépendent notamment de son environnement, c'est-à-dire que les éléments E n'ont pas nécessairement tous les mêmes dimensions. Un élément E₁ de la zone géographique peut par exemple être une rue, un élément E₂ de la zone géographique une portion de rue, un élément E₃ de la zone géographique une intersection, etc.

Pour chaque élément Eₖ, k étant un nombre entier positif, des données sont mémorisés dans les moyens de stockage. Dans la suite du texte, on appelle entité numérique ENₖ l'ensemble des données concernant l'élément Eₖ, cela n'impliquant pas une disposition particulière de ces données dans les moyens de stockage. L'entité numérique ENₖ comprend des coordonnées de l'élément Eₖ dans la zone géographique et des données topologiques relatives à la position de l'élément Eₖ par rapport aux autres éléments, c'est-à-dire des données relatives aux éléments E voisins de l'élément Eₖ.

A l'étape 202, le dispositif de construction d'une carte numérique est disposé dans un élément E, par exemple l'élément E₁. A ce moment, les moyens de réception reçoivent des signaux provenant d'émetteurs disposés à proximité. L'identifiant de chaque émetteur visible est stocké dans l'entité numérique EN associée à l'élément E dans lequel se trouve le dispositif, ici l'entité numérique EN₁. Une liste d'identifiants associée à l'élément E₁ est ainsi construite et mémorisée. Pour chaque émetteur visible, le dispositif évalue le caractère volatil de l'émetteur et mémorise un poids associé à l'émetteur dans l'entité numérique EN₁.

Lorsque l'étape 202 a été exécutée, le dispositif est déplacé dans un autre élément et l'étape 202 est répétée. L'étape 202 est répétée jusqu'à ce que l'ensemble de la zone géographique ait été cartographié, c'est-à-dire jusqu'à ce qu'une liste d'identifiants d'émetteurs visibles ait été déterminée et mémorisée pour chaque élément E.

La carte numérique est ensuite transmise au dispositif de localisation 1 et mémorisée dans le module de stockage 4.

En variante, la carte numérique peut être mémorisée dans un dispositif distant du dispositif de localisation 1. Dans ce cas, le dispositif de localisation 1 comporte des moyens d'émission-réception lui permettant d'accéder à la carte numérique, par exemple des moyens de connexion à un réseau Internet.

En se référant à la figure 3, on va maintenant décrire les étapes d'un procédé de localisation exécuté par le dispositif de localisation 1.

A l'étape 301, le module d'écoute 3 décode les signaux Wi-Fi reçus par le récepteur 2 et crée une liste d'identifiants comprenant un identifiant de chaque émetteur visible. On notera que le module d'écoute 3 ne décode que les trames « balises », c'est-à-dire les trames contenant l'identifiant de l'émetteur. Le module d'écoute 3 transmet la liste d'identifiants au module de traitement 5.

A l'étape 302, le module de traitement 5 sélectionne une entité numérique ENᵢ, i étant un nombre entier positif.

L'entité ENᵢ est de préférence sélectionnée à l'aide d'un historique des déplacements du dispositif 1, c'est-à-dire que l'entité numérique ENᵢ sélectionnée est de préférence associée à l'élément Eₙ dans lequel se trouvait le dispositif 1 à l'exécution précédente du procédé, c'est-à-dire i=n, ou à un élément E voisin de l'élément Eₙ. S'il n'existe pas d'historique, par exemple lors de la première exécution du procédé de localisation, l'entité ENᵢ est par exemple sélectionnée de manière aléatoire.

Le module 5 compare la liste d'identifiants transmise par le module d'écoute 3 avec la liste d'identifiants mémorisée dans l'entité ENᵢ sélectionnée et en déduit un coefficient de corrélation γᵢ.

Lorsque le coefficient de corrélation γᵢ est supérieur à un seuil prédéterminé, le module de traitement 5 sélectionne l'élément Eᵢ comme élément candidat, c'est-à-dire comme élément E dans lequel le dispositif 1 est susceptible de se trouver.

L'étape 302 est répétée pour un ensemble d'entités numériques EN. Lorsqu'il existe un historique des déplacements du dispositif 1, l'ensemble d'entités comprend par exemple l'entité ENₙ associée à l'élément Eₙ dans lequel se trouvait le dispositif 1 à l'exécution précédente du procédé et des entités EN associées respectivement à des éléments E voisins de l'élément Eₙ. On notera que l'historique des déplacements utilisé pour déterminer l'ensemble d'entités se limite aux déplacements effectués pendant l'utilisation actuelle du dispositif 1, c'est-à-dire que le procédé ne prend pas en compte des déplacements qui ont pu être effectués et mémorisés précédemment si le dispositif 1 a été éteint ou désactivé depuis. Lorsqu'il n'existe pas d'historique, l'ensemble d'entités comprend par exemple toutes les entités EN mémorisées dans le module de stockage 4.

A l'étape 303, le module de traitement 5 calcule pour chaque élément candidat un score à partir d'un ensemble de critères de sélection mémorisés dans l'entité numérique EN correspondante. Le score est lié à une probabilité de l'élément candidat d'être l'élément E dans lequel se trouve réellement le dispositif 1.

L'ensemble de critères de sélection comprend par exemple un critère relatif au poids renseignant sur le caractère volatil de chaque émetteur de la liste d'identifiants. Ainsi, un émetteur considéré comme très volatil peut avoir moins d'importance qu'un émetteur considéré comme peu volatil dans le calcul du score. En d'autres termes, la non détection d'un émetteur très volatil à l'étape 301 ne doit pas avoir trop d'influence sur le score de l'élément candidat.

L'ensemble de critères de sélection peut également comprendre un critère relatif à un ratio entre les émetteurs visibles (dont l'identifiant appartient à la liste d'identifiants transmise par le module d'écoute 3) et les émetteurs associés à un élément candidat (dont l'identifiant appartient à la liste d'identifiants mémorisée dans l'entité EN correspondante).

Lorsqu'il existe un historique des déplacements du dispositif 1, l'ensemble de critères de sélection peut également comprendre un critère relatif au respect de la continuité des déplacements du dispositif 1. Par exemple, si l'utilisateur du dispositif 1 se déplaçait le long d'une rue, il ne peut pas se trouver sur une rue parallèle à l'exécution suivante du procédé. On notera qu'ici aussi on considère un historique des déplacements pour l'utilisation actuelle du dispositif 1.

Le module de traitement 5 sélectionne comme meilleur candidat, c'est-à-dire comme candidat le plus probable, l'élément candidat dont le score est le plus élevé. Par exemple, l'élément Ep est sélectionné.

A l'étape 304, le module 5 localise le dispositif 1 dans l'élément E sélectionné comme meilleur candidat à l'étape 303, ici l'élément Eₚ.

Les données de localisation sont transmises en sortie du module de traitement 5 et peuvent être utilisées, par exemple, par un dispositif de navigation (non représenté).

En outre, les données de localisation sont mémorisées comme historique des déplacements dans le module de stockage 4. La localisation courante est comparée avec des localisations passées et, le cas échéant, des données relatives aux transitions d'éléments E, c'est-à-dire un temps d'entrée dans l'élément E ou un temps de sortie de l'élément E, sont également mémorisées dans le module de stockage 4. L'historique est utilisé lors des exécutions suivantes du procédé pour calculer le score d'un élément candidat. L'historique est également utilisé pour réduire le nombre d'entités à tester à l'étape 302, ce qui permet une exécution plus rapide du procédé de localisation.

A l'étape 305, le module de traitement 5 détermine une estimation de la position du dispositif 1 à partir des coordonnées de l'élément E sur lequel le dispositif 1 a été localisé et d'un modèle d'évolution des déplacements du dispositif 1. Lorsque le dispositif 1 se trouve dans un véhicule, le modèle d'évolution s'appuie notamment sur une vitesse moyenne du véhicule. Le modèle d'évolution s'appuie également sur l'historique des déplacements sur les M derniers éléments E, M étant un nombre entier supérieur à 1. Les données de positions sont transmises en sortie du module de traitement 5 et peuvent être utilisées, par exemple, par un dispositif de navigation (non représenté) destiné à traiter des données de position, ce qui est notamment le cas d'un dispositif de navigation du type utilisé avec un système de positionnement par satellites.

Le procédé de localisation décrit ci-dessus adopte une méthodologie inverse par rapport à celle déployée dans un système de positionnement par triangulation. Ce procédé de localisation permet de localiser un dispositif 1 dans une zone géographique en s'appuyant sur une carte numérique de la zone géographique, une base de données des émetteurs visibles dans chaque élément de la zone géographique et sur la détection des émetteurs visibles au voisinage du dispositif 1.

Ainsi, il n'est pas nécessaire de connaître la position des émetteurs, il suffit de déterminer quels émetteurs sont visibles depuis une position actuelle du dispositif 1.

Ce procédé de localisation permet donc de s'affranchir des données de position des émetteurs, de mesures de puissance peu fiables des signaux des émetteurs IEEE 802.11 et du problème lié aux vitesses relatives entre émetteurs et récepteur (perturbation de la mesure de puissance).

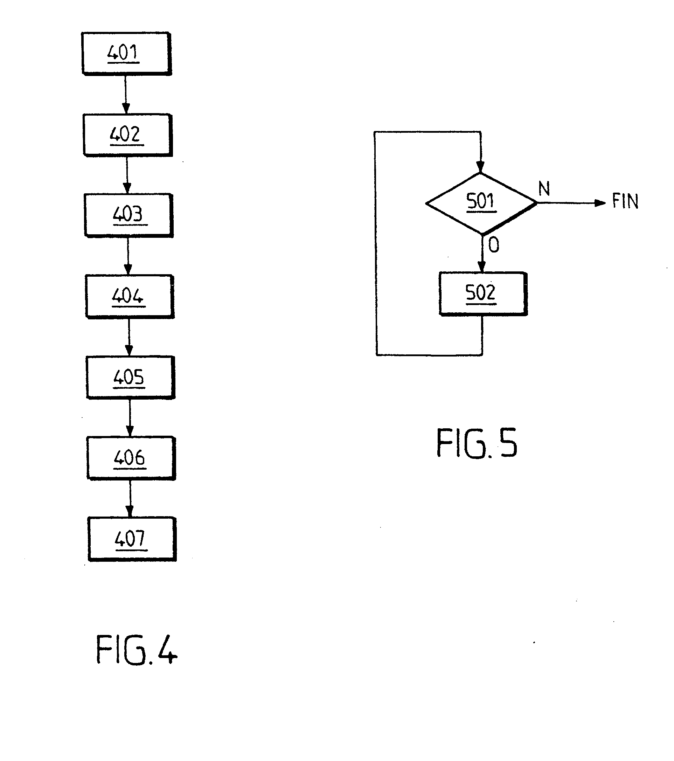

En se référant à la figure 4, on va maintenant décrire un deuxième procédé de localisation. Ici, le dispositif de localisation 1 coopère avec un système de positionnement par satellites 6 (représenté en traits interrompus sur la figure 1).

Les étapes 401 à 405 sont similaires aux étapes 301 à 305 décrites précédemment.

A l'étape 406, le système de positionnement par satellites 6 détermine une position du dispositif 1 par triangulation.

A l'étape 407, le module de traitement 5 détermine un facteur de confiance f_{GPS} associé au système de positionnement par satellites 6, qui est notamment fonction du nombre de satellites utilisés pour la détermination de la position du dispositif à l'étape 405. De manière similaire, le module de traitement 5 détermine un facteur de confiance f_{Wi-Fi} associé au dispositif de localisation 1, qui est notamment fonction du nombre d'émetteurs Wi-Fi utilisés pour la détermination de la localisation du dispositif 1 à l'étape 404.

En fonction du rapport entre les facteurs de confiance f_{GPS} et f_{Wi-Fi}, le module de traitement 5 détermine si la position doit être déterminée à partir du système de positionnement par satellites 6, à partir du dispositif de localisation 1 ou à partir d'une combinaison du système de positionnement par satellites 6 et du dispositif de localisation 1. Dans ce dernier cas, la position déterminée par le système de positionnement par satellites 6 est corrigée par la localisation déterminée par le dispositif 1.

Le deuxième procédé de localisation permet d'obtenir une localisation et/ou navigation plus réactive. Il permet en outre de s'affranchir des problèmes de transitions entre les zones où le système de positionnement par satellites 6 fonctionne, c'est-à-dire les zones où suffisamment de satellites sont visibles, et celles où le dispositif 1 fonctionne, c'est-à-dire les zones où suffisamment d'émetteurs Wi-Fi sont présents.

D'autres variantes sont possibles. Par exemple, bien que les émetteurs Wi-Fi envoient automatiquement périodiquement des trames « balise », c'est-à-dire des signaux contenant l'identifiant de l'émetteur, le dispositif 1 peut émettre des trames « requête » sollicitant l'émission par les émetteurs de leur identifiant. Cette variante permet d'obtenir plus rapidement l'identifiant de chaque émetteur visible.

Le dispositif 1 peut mesurer la puissance des signaux reçus et en déduire, pour chaque émetteur, un indicateur sur le niveau de puissance reçue. Dans ce cas, l'ensemble de critères de sélection peut comprendre un critère relatif au niveau de puissance reçue, par exemple seuls les signaux suffisamment forts sont considérés. On notera qu'il ne s'agit que d'un indicateur de proximité des émetteurs associés à un élément et non d'une stratégie de positionnement relatif par triangulation puisque les positions relatives et absolues des émetteurs sont inconnues.

Lorsque le dispositif 1 est disposé dans un véhicule, il peut coopérer avec un dispositif d'indication de cap (capteur d'angle volant, boussole électronique, capteur accélérométrique, ...). Les données transmises par le dispositif d'indication de cap permettent notamment une bonne détection des intersections lorsque le véhicule tourne. Cela permet de préciser la localisation obtenue par le procédé de localisation décrit précédemment. On notera qu'un indicateur de cap ne présente pas d'inertie et permet donc de « recaler » le dispositif 1.

Le dispositif 1 peut être programmé pour exécuter un procédé de mise à jour automatique dont les étapes vont être décrites en référence à la figure 5. Le procédé de mise à jour est effectué après l'étape de localisation 304 ou 404.

A l'étape 501, le dispositif 1 teste une condition d'existence d'un identifiant d'un émetteur dont un signal a été reçu à l'étape 301 et qui n'appartient pas à la liste d'identifiants associée audit élément sélectionné comme meilleur candidat à l'étape 303. Lorsque la condition est vérifiée, le dispositif 1 passe à l'étape 502, sinon le procédé de mise à jour automatique se termine.

A l'étape 502, le dispositif 1 mémorise l'identifiant dans la liste d'identifiants associée à l'élément sélectionné comme meilleur candidat. Par défaut, l'émetteur est considéré comme très volatil, et le poids associé à l'émetteur est donc initialisé à une valeur basse. Ainsi, cet émetteur aura une influence limitée sur la localisation du dispositif 1 lors des exécutions suivantes du procédé de localisation. Le procédé retourne à l'étape 501.

Les étapes 501 et 502 permettent ainsi une mise à jour automatique des moyens de stockage lorsque des émetteurs Wi-Fi sont ajoutés ou remplacés.

Dans cette variante, le procédé de mise à jour automatique peut comporter une étape de mise à jour locale. L'étape de mise à jour locale consiste à augmenter le poids associé à un émetteur qui avait été détecté lors d'un passage à l'étape 501 lorsque l'émetteur est de nouveau détecté dans le même élément.

Dans cette variante, le procédé de mise à jour automatique peut comporter une étape de mise à jour statistique. L'étape de mise à jour statistique peut être exécutée en complément ou à la place de l'étape de mise à jour locale. Ici, le dispositif de localisation 1 comporte des moyens de connexion à un réseau Internet. Lorsque l'utilisateur connecte le dispositif 1 à un réseau Internet et qu'il accède à un site de mise à jour, chaque identifiant mémorisé à l'étape 502 est mémorisé dans une base de données de mise à jour du site comme associé à l'élément correspondant. La base de données de mise à jour est ainsi complétée par chaque utilisateur se connectant au site de mise à jour.

Chaque identifiant mémorisé à l'étape 502 est comparé avec le contenu de la base de données de mise à jour. Une comparaison statistique, c'est-à-dire une comparaison entre ce que le dispositif 1 de l'utilisateur a détecté et ce que les dispositifs similaires d'autres utilisateurs ont détecté, permet de valider ou non l'appartenance de l'identifiant à la liste d'identifiants correspondante. Des données de mise à jour sont alors émises à destination du dispositif 1 et mémorisés dans les moyens de stockage 4. Ces données comprennent par exemple un nouveau poids associé à un identifiant mémorisé à l'étape 502 qui a été validé, un autre identifiant, associé à un élément, qui n'a pas encore été détecté par le dispositif 1 de l'utilisateur à l'étape 501, par exemple parce que l'utilisateur ne s'est pas déplacé dans l'élément correspondant, et/ou une commande de suppression d'un identifiant mémorisé à l'étape 502 qui n'a pas été validé.

Bien que l'invention ait été décrite en relation avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de localisation comprenant les étapes consistant à :
a) Recevoir (301, 401) dans un dispositif de localisation (1) des signaux provenant d'émetteurs de signaux hertziens, chaque émetteur de signaux hertziens étant apte à émettre une trame numérique dont l'entête contient au moins un identifiant de l'émetteur, et déterminer une liste d'identifiants contenant un identifiant de chaque émetteur dont au moins un signal a été reçu,
b) Déterminer (302, 402), en comparant ladite liste d'identifiants déterminée à l'étape a) avec des listes d'identifiants mémorisées dans une base de données de localisation, un ensemble d'éléments candidats, chaque liste d'identifiants mémorisée dans ladite base de données de localisation étant associée à une sous-zone, dite élément (E), d'une zone géographique,
c) sélectionner (303, 403) le meilleur candidat parmi ledit ensemble d'éléments candidats en utilisant un ensemble de critères de sélection comprenant au moins un critère relatif au caractère volatil d'un émetteur dont l'identifiant appartient à une liste d'identifiants associée à un élément candidat, et
d) localiser (304, 404) ledit dispositif de localisation (1) dans ledit élément (E) sélectionné comme meilleur candidat à l'étape c).

2. Procédé de localisation selon la revendication 1, **caractérisé en ce qu'**il comprend une étape supplémentaire consistant à estimer (305, 405) la position dudit dispositif de localisation (1) en utilisant la localisation dudit dispositif de localisation définie à l'étape d) et un modèle d'évolution des déplacements dudit dispositif de localisation.

3. Procédé de localisation selon la revendication 1 ou 2, **caractérisé en ce que** l'étape b) comprend les sous-étapes consistant à :
e) déterminer un coefficient de corrélation (γᵢ) entre ladite liste d'identifiants déterminée à l'étape a) et une liste d'identifiants mémorisée dans ladite base de données de localisation, et,
f) lorsque ledit coefficient de corrélation (γᵢ) est supérieur à un seuil prédéterminé, sélectionner ledit élément (Eᵢ) associé à ladite liste d'identifiants mémorisée dans ladite base de données comme élément candidat.

4. Procédé de localisation selon la revendication 3, **caractérisé en ce que** ladite base de données de localisation comprend des données topologiques relatives à la position des éléments les uns par rapport aux autres, les étapes e) et f) étant exécutées pour une liste d'identifiants associée à l'élément (E) dans lequel se trouvait ledit dispositif de localisation (1) à la dernière exécution dudit procédé de localisation et pour chaque liste d'identifiants associée à un élément voisin de l'élément (E) dans lequel se trouvait ledit dispositif de localisation à la dernière exécution dudit procédé de localisation.

5. Procédé de localisation selon l'une quelconque des revendications 1 à 4, **caractérisé en ce que** ledit ensemble de critères de sélection comprend au moins un critère relatif à un ratio entre ladite liste d'identifiants déterminée à l'étape a) et une liste d'identifiants mémorisée dans ladite base de données de localisation et/ou un critère relatif au respect de la continuité du déplacement dudit dispositif de localisation (1).

6. Procédé de localisation selon l'une quelconque des revendications 1 à 5, **caractérisé en ce que** l'étape a) comprend une sous-étape consistant à mesurer la puissance de chaque signal reçu, ledit ensemble de critères de sélection comprenant au moins un critère relatif à la puissance d'un signal reçu.

7. Procédé de localisation selon l'une quelconque des revendications 1 à 6, **caractérisé en ce qu'**il est combiné avec un procédé de mise à jour, effectué après l'étape d), comprenant une étape consistant à :
g) déterminer (501) un identifiant d'un émetteur dont un signal a été reçu à l'étape a) et qui n'appartient pas à la liste d'identifiants associée audit élément sélectionné comme meilleur candidat et mémoriser (502) ledit identifiant dans la liste d'identifiants associée audit élément sélectionné comme meilleur candidat.

8. Procédé de localisation selon la revendication 7, **caractérisé en ce que** ledit dispositif de localisation (1) comporte des moyens de connexion à un réseau Internet.

9. Procédé de localisation selon les revendications 7 et 8, **caractérisé en ce que**, à l'étape g), le critère relatif au caractère volatil dudit émetteur dont l'identifiant est mémorisé est fixé à une valeur basse, ledit procédé de mise à jour comprenant des étapes consistant à connecter ledit dispositif de localisation à un site Internet de mise à jour, comparer un identifiant mémorisé à l'étape g) avec le contenu d'une base de données de mise à jour, et, en fonction de ladite comparaison, mettre à jour la valeur dudit critère relatif au caractère volatil de l'émetteur dans ladite base de données de localisation.

10. Procédé de localisation selon l'une quelconque des revendications 1 à 9, **caractérisé en ce que** ledit dispositif de localisation (1) est utilisé en combinaison avec un dispositif d'indication de cap.

11. Procédé de localisation selon l'une quelconque des revendication 1 à 10, **caractérisé en ce que** ledit dispositif de localisation (1) est apte à coopérer avec un système de positionnement par satellites (6), ledit procédé de localisation comportant les étapes consistant à :
h) déterminer un premier indice de confiance (f_{GPS}) associé audit système de positionnement par satellites (6),
i) déterminer un deuxième indice de confiance (f_{Wi-Fi}) associé audit dispositif de localisation (1),
j) comparer lesdits premier et deuxième indices de confiance et, en fonction de la comparaison, déterminer si la localisation doit être déterminée à partir dudit système de positionnement par satellites (6), à partir dudit dispositif de localisation (1) ou à partir d'une combinaison dudit système de positionnement par satellites (6) et dudit dispositif de localisation (1).

12. Dispositif de localisation utilisant le procédé de localisation selon l'une des revendications 1 à 11.

## Claims

1. Method of localisation comprising the steps consisting of:
a) receiving (301, 401) in a localisation device (1) signals from radio signal transmitters, each transmitter of radio signals being able of transmitting a digital frame the header of which contains at least one identifier of the transmitter, and determine a list of identifiers containing an identifier for each transmitter of which at least one signal was received,
b) determining (302, 402), by comparing the said list of identifiers determined in step a) with the lists of the identifiers stored in a localisation database, a set of candidate elements, each list of identifiers stored in the said database of localisation being associated with a sub-area, said element (E), of a geographic area,
c) selecting (303, 403) the best candidate among the said set of element candidates by using a set of selection criteria comprising at least a criterion related to the volatile nature of a transmitter the identifier of which belongs to a list of identifiers associated to a candidate element, and
d) localising (304, 404) the said localisation device (1) in the said element (E) selected as the best candidate in step c).

2. Method of localisation according to claim 1, **characterised in that** it comprises a further step consisting in estimating (305, 405) the position of the said localisation device (1) by using the localisation of the said localisation device defined in step d) and an evolution model of the displacements of the said localisation device.

3. Method of localisation according to claim 1 or 2, **characterised in that** step b) comprises the following sub-steps consisting in:
e) determining a correlation coefficient (γ₁) between the said list of identifiers determined in step a) and a list of identifiers stored in the said localisation database, and,
f) when the said correlation coefficient (γ₁) is higher than a predetermined threshold, select the said element (Eᵢ) associated to the said list of identifiers stored in the said database as element candidate.

4. Method of localisation according to claim 3, **characterised in that** the said localisation database comprises topological data related to the position of elements the ones with respect to the others, the steps e) and f) being carried out for a list of identifiers associated to the element (E) wherein was located the said localisation device (1) during the last execution of the said method of localisation and for each list of identifiers associated with an element close to element (E) wherein was located the said localisation device during the last execution of the said method of localization.

5. Method of localisation according to any of claims 1 to 4, **characterised in that** the said set of selection criteria comprises at least one criterion related to a ratio between the said list of identifiers determined in step a) and a list of identifiers stored in the said localisation database and/or a criterion related in meeting the continuity of the displacement of the said localisation device (1).

6. Method of localisation according to any of claims 1 to 5, **characterised in that** step a) comprises a sub-step consisting in measuring the power of each received signal, the said set of selection criteria comprising at least a criterion related to the power of a received signal.

7. Method of localisation according to any of claims 1 to 6, **characterised in that** it is combined with an update method, carried out after step d), comprising a step consisting of:
g) determining (501) an identifier of a transmitter a signal of which was received in step a) and which does not belong to the list of identifiers associated to the said selected element as the best candidate and store (502) the said identifier in the list of identifiers associated to the said selected element as the best candidate.

8. Method of localisation according to claim 7, **characterised in that** said localisation device (1) comprises means for connection to an Internet network.

9. Method of localisation according to claims 7 and 8, **characterised in that** step g), the criterion relating to the volatile nature of the said transmitter the identifier of which is stored and set at a low value, the said method of updating comprising the steps consisting of connecting the said localisation device to a website update, comparing an identifier stored in step g) with the contents of a database update, and, depending from the said comparison, update the value of the said criterion related to the volatile nature of the transmitter in the said localisation database.

10. Method of localisation according to any of claims 1 to 9 **characterised in that** the said localisation device (1) is used in combination with a CAP indication device.

11. Method of localisation according to any of claims 1 to 10 **characterised in that** the said localisation device (1) is able of interacting with a satellite positioning system (6), the said method of localization comprising the steps consisting of:
h) determining a first confidence index (f_{GPS}) associated with the said satellite positioning system (6),
i) determine a second confidence index (F_{Wi-Fi}) associated with the said localisation device (1),
j) comparing the said first and second confidence indices and, depending on the comparison, determine whether the localisation should be determined from the said satellite positioning system (6), from the said localisation device (1) or from a combination of the said satellite positioning system (6) and the said localisation device (1).

12. Localisation device by using the method of localisation according to one of the claims from 1 to 11.

## Patentansprüche

1. Lokalisierungsverfahren, das die Schritte umfasst, die bestehen in:
a) Empfangen (301, 401) von Signalen von Sendern Hertzscher Signale in einer Lokalisierungsvorrichtung (1), wobei jeder Sender Hertzscher Signale imstande ist, einen digitalen Rahmen zu senden, dessen Vorsatz mindestens ein Kennwort des Senders enthält, und bestimmen einer Kennwortliste, die ein Kennwort jedes Senders enthält, von dem mindestens ein Signal empfangen wurde,
b) Bestimmen (302, 402) einer Gruppe von Kandidatenelementen durch Vergleichen der in Schritt a) bestimmten Kennwortliste mit in einer Lokalisierungsdatenbank gespeicherten Kennwortlisten, wobei jede in der Lokalisierungsdatenbank gespeicherte Kennwortliste einem als Element (E) bezeichneten Teilbereich eines geografischen Bereichs zugeordnet ist,
c) Auswählen (303, 403) des besten Kandidaten aus der Kandidatenelementegruppe unter Verwendung einer Gruppe von Auswahlkriterien, die mindestens ein Kriterium umfasst, das sich auf den volatilen Charakter eines Senders bezieht, dessen Kennwort zu einer Kennwortliste gehört, die einem Kandidatenelement zugeordnet ist, und
d) Lokalisieren (304, 404) der Lokalisierungsvorrichtung (1) in dem Element (E), das in Schritt c) als bester Kandidat ausgewählt wurde.

2. Lokalisierungsverfahren nach Anspruch 1, **dadurch gekennzeichnet, dass** es einen zusätzlichen Schritt umfasst, der darin besteht, die Position der Lokalisierungsvorrichtung (1) durch Verwenden der in Schritt d) definierten (305,405) Lokalisierung der Lokalisierungsvorrichtung und eines Modells der Entwicklung der Bewegungen der Lokalisierungsvorrichtung abzuschätzen.

3. Lokalisierungsverfahren nach Anspruch 1 oder 2, **dadurch gekennzeichnet, dass** Schritt b) die Teilschritte umfasst, die bestehen in:
e) Bestimmen eines Korrelationskoeffizienten (γᵢ) zwischen der in Schritt a) bestimmten Kennwortliste und einer in der Lokalisierungsdatenbank gespeicherten Kennwortliste, und
f) wenn der Korrelationskoeffizient (γᵢ) größer ist als eine vorbestimmte Schwelle, auswählen des Elements (Eᵢ), das der in der Datenbank gespeicherten Kennwortliste zugeordnet ist, als Kandidatenelement.

4. Lokalisierungsverfahren nach Anspruch 3, **dadurch gekennzeichnet, dass** die Lokalisierungsdatenbank topologische Daten umfasst, die sich auf die Position der Elemente zueinander beziehen, wobei die Schritte e) und f) für eine Kennwortliste durchgeführt werden, die dem Element (E) zugeordnet ist, in dem sich die Lokalisierungsvorrichtung (1) bei der letzten Durchführung des Lokalisierungsverfahrens befand und für jede Kennwortliste, die einem dem Element (E) benachbarten Element zugeordnet ist, in dem sich die Lokalisierungsvorrichtung bei der letzten Durchführung des Lokalisierungsverfahrens befand.

5. Lokalisierungsverfahren nach einem der Ansprüche 1 bis 4, **dadurch gekennzeichnet, dass** die Gruppe der Auswahlkriterien mindestens ein Kriterium umfasst, das sich auf ein Verhältnis zwischen der in Schritt a) bestimmten Kennwortliste und einer in der Lokalisierungsdatenbank gespeicherten Kennwortliste bezieht und/oder ein Kriterium, das sich auf die Einhaltung der Kontinuität der Bewegung der Lokalisierungsvorrichtung (1) bezieht.

6. Lokalisierungsverfahren nach einem der Ansprüche 1 bis 5, **dadurch gekennzeichnet, dass** Schritt a) einen Teilschritt umfasst, der darin besteht, die Leistung jedes empfangenen Signals zu messen, wobei die Gruppe der Auswahlkriterien mindestens ein Kriterium umfasst, das sich auf die Leistung eines empfangenen Signals bezieht.

7. Lokalisierungsverfahren nach einem der Ansprüche 1 bis 6, **dadurch gekennzeichnet, dass** es mit einem Aktualisierungsverfahren kombiniert ist, das nach Schritt d) durchgeführt wird, einen Schritt umfassend, der besteht in:
g) Bestimmen (501) eines Kennworts eines Senders, von dem ein Signal in Schritt a) empfangen wurde und das nicht zu der Kennwortliste gehört, die dem ausgewählten Element als bester Kandidat zugeordnet wurde, und speichern (502) des Kennworts in der Kennwortliste, die dem ausgewählten Element als bester Kandidat zugeordnet wurde.

8. Lokalisierungsverfahren nach Anspruch 7, **dadurch gekennzeichnet, dass** die Lokalisierungsvorrichtung (1) Mittel zur Verbindung mit einem Internetnetz aufweist.

9. Lokalisierungsverfahren nach den Ansprüchen 7 und 8, **dadurch gekennzeichnet, dass** in Schritt g) das Kriterium, das sich auf den volatilen Charakter des Senders bezieht, dessen Kennwort gespeichert wird, auf einen niedrigen Wert festgelegt wird, wobei das Aktualisierungsverfahren die Schritte umfasst, die darin bestehen, die Lokalisierungsvorrichtung mit einer Aktualisierungs-Internetwebseite zu verbinden, ein in Schritt g) gespeichertes Kennwort mit dem Inhalt einer Aktualisierungsdatenbank zu vergleichen und in Abhängigkeit von dem Vergleich den Wert des Kriterium, das sich auf den volatilen Charakter des Senders bezieht, in der Lokalisierungsdatenbank zu aktualisieren.

10. Lokalisierungsverfahren nach einem der Ansprüche 1 bis 9, **dadurch gekennzeichnet, dass** die Lokalisierungsvorrichtung (1) in Kombination mit einer Kursanzeigevorrichtung verwendet wird.

11. Lokalisierungsverfahren nach einem der Ansprüche 1 bis 10, **dadurch gekennzeichnet, dass** die Lokalisierungsvorrichtung (1) imstande ist, mit einem Positionierungssystem durch Satelliten (6) zusammenzuarbeiten, wobei das Lokalisierungsverfahren die Schritte umfasst, die bestehen in:
h) Bestimmen eines ersten Vertrauensindexes (f_{GPS}), der dem Positionierungssystem durch Satelliten (6) zugeordnet ist, h) Bestimmen eines zweiten Vertrauensindexes (f_{Wi-Fi}), der der Lokalisierungsvorrichtung (1) zugeordnet ist,
j) Vergleichen des ersten und zweiten Vertrauensindexes und, in Abhängigkeit vom Vergleich, bestimmen, ob die Lokalisierung ausgehend vom Positionierungssystem durch Satelliten (6), ausgehend von der Lokalisierungsvorrichtung (1) oder ausgehend von einer Kombination des Positionierungssystems durch Satelliten (6) und der Lokalisierungsvorrichtung (1) bestimmt werden muss.

12. Lokalisierungsvorrichtung, die das Lokalisierungsverfahren nach einem der Ansprüche 1 bis 11 verwendet.
